Europäisches Patentamt

European Patent Office

Office européen des brevets

(11) Publication number : **0 494 798 A1**

# (12) EUROPEAN PATENT APPLICATION

(21) Application number : 92300246.3

(22) Date of filing : 10.01.92

(51) Int. Cl.$^5$ : **F01D 25/16**

(30) Priority : **11.01.91 JP 3378/91 U**
**17.01.91 JP 4310/91 U**

(43) Date of publication of application :
**15.07.92 Bulletin 92/29**

(84) Designated Contracting States :
**DE FR GB IT**

(71) Applicant : **ISHIKAWAJIMA-HARIMA**
**JUKOGYO KABUSHIKI KAISHA**
**No. 2-1, Ote-machi 2-chome, Chiyoda-ku**
**Tokyo-to 100 (JP)**

(72) Inventor : **Koike, Takaaki**
**No. 4-32-14, Dai-machi**
**Hachioji-shi, Tokyo-to 193 (JP)**
Inventor : **Shimizu, Masami**
**No. 4-16-1, Tsuganodai**
**Chiba-shi, Chiba-ken 260 (JP)**

(74) Representative : **Jennings, Nigel Robin et al**
**KILBURN & STRODE 30 John Street**
**London WC1N 2DD (GB)**

(54) **Turbocharger.**

(57)    A turbocharger includes a turbine housing (1) containing a turbine wheel (4), a compressor housing (2) containing a compressor impeller (5) and a turbine shaft (6) interconnecting the turbine wheel and compressor impeller and rotatably supported by two floating bushes (9) received in the bore of a journal support (7). The outer end face of the floating bush (9) closest to the compressor housing (2) is engaged by a thrust bush (12). A cylindrical spacer (14) is force fitted into the journal support between the two floating bushes and locates them axially. The thrust bush (12) is of reduced diameter at its end which engages the floating bush (9) and that end is received in the journal support and is spaced from the surface of the bore in the journal support by a clearance ($C_1$).

F i g . 3

EP 0 494 798 A1

The present invention relates to turbochargers and is concerned with the bearing system for the turbine shaft of turbochargers. More specifically, the invention relates to a turbocharger of the type including a turbine housing containing a turbine wheel, a compressor housing containing a compressor impeller and a turbine shaft interconnecting the turbine wheel and compressor impeller and rotatably supported by two floating bushes received in a journal support.

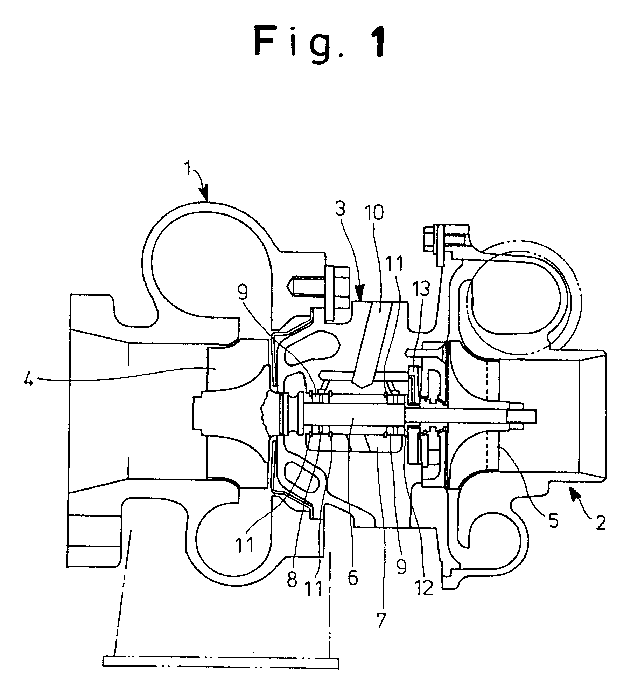

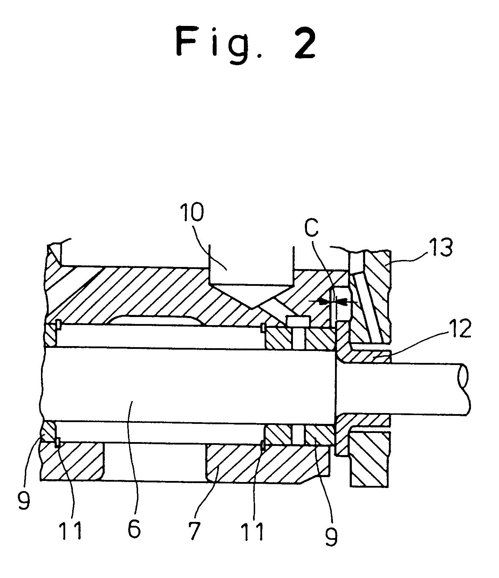

Figure 1 is a diagrammatic longitudinal sectional view of a known turbocharger of this type and Figure 2 is an enlarged scrap view of one of the turbine shaft journal bearings. This turbocharger comprises a turbine housing 1 and a compressor housing 2 which are connected together with the interposition of a bearing housing 3. A turbine wheel 4 in the housing 1 is rotatably connected to a compressor impeller 5 in the housing 2 by means of a turbine shaft 6 which is rotatable supported by journal bearings in the housing 3. Rotation of the turbine wheel 4 by exhaust gas from an engine causes rotation of the compressor impeller 5 through the turbine shaft 6 so that engine intake air is compressed and fed to the engine.

The turbine shaft 6, which rotates at high speed, requires lubrication at its journal bearings. To this end, two floating bushes 9 with radial oil feed holes 8 are used as the journal bearings and are rotatably fitted into respective axially opposed ends of a cylindrical machined journal support 7. In use, lubricating oil is fed through an oil feed passage 10 in the housing 3 and thence to the inner and outer periphery of the floating bushes 9. The floating bush 9 adjacent to the turbine wheel 4 is axially held in position by two retaining rings 11 set in the inner wall of the journal support 7 while the floating bush 9 adjacent to the compressor impeller 5 is held in position, as shown in Figure 2, between a further retaining ring 11 and a thrust bush 12, which is engaged by a thrust bushing 13.

Formerly, the floating bush adjacent to the compressor impeller was retained in position by two retaining rings like the floating bush adjacent to the turbine wheel. However, it is the general practice at present to omit the outer retaining ring and instead to arrange for the outlet end face of the floating bush to abut the thrust bush 12 so as to increase the distance between the floating bushes 9 and thus to enhance the stability of the rotation of the turbine shaft 6 and also to reduce the number of components.

The use of the retaining rings 11 for axially positioning the floating bush 9 is disadvantageous in that the necessary machining of the grooves for the retaining rings 11 and fitting of the latter into the former are very time-consuming and the axial position of the rings 11 can not be precisely predetermined whereby the bushes tend to be subject to damage at their end faces.

There is also a difference in the pressure-bearing areas on the opposed end faces of the floating bush 9 caused by the axial clearance C between the thrust bush 12 and the outer end face of the journal support 7, the clearance C serving to prevent the rotating thrust bush 12 from contacting the journal support 7. Since the pressure-bearing area on the end face adjacent to the thrust bush 12 is reduced by the clearance C, thereby causing a change in the bearing force, the stability of the turbine shaft 6 is impaired. A similar problem is caused by a fluctuation in the oil discharge resistance which in turn is caused by fluctuations in the axial clearance C when the turbine shaft 6 is displaced axially.

It is thus an object of the present invention to provide a turbocharger of the type referred to above whose bearing system overcomes the various problems and disadvantages referred to above.

According to a first aspect of the present invention a turbocharger of the type referred to above is characterised by a cylindrical spacer force fitted into the journal support between the two floating bushes. In use, this spacer will engage the inner end surfaces of the two floating bushes and will position them axially and prevent them moving towards one another. The spacer is prevented from rotating by its force fit and the frictional loss in the system is thus reduced and the rotational stability of the floating bushes is enhanced.

The outer end face of the floating bush closest to the turbine housing may engage a retaining ring, as is conventional, but it is preferred that it engages a shoulder formed on the turbine shaft though it may also engage a ring force fitted either onto the turbine shaft or into the journal support.

The outer end face of the floating bush closest to the compressor housing may be engaged by a thrust bush, as is known per se, and in this event it is preferred that the thrust bush is of reduced diameter at its end which engages the floating bush and that the said end is received in the journal support and is spaced from the surface of the bore in the journal support. These features ensure that the supply and discharge of lubricating oil are maintained stable even if the outer periphery of the floating bush is worn or if the axial clearance between the thrust bush and the outer end face of the journal support varies.

The features of this preferred embodiment may also find application separately, that is to say other than in combination with the features of the characterising portion of claim 1.

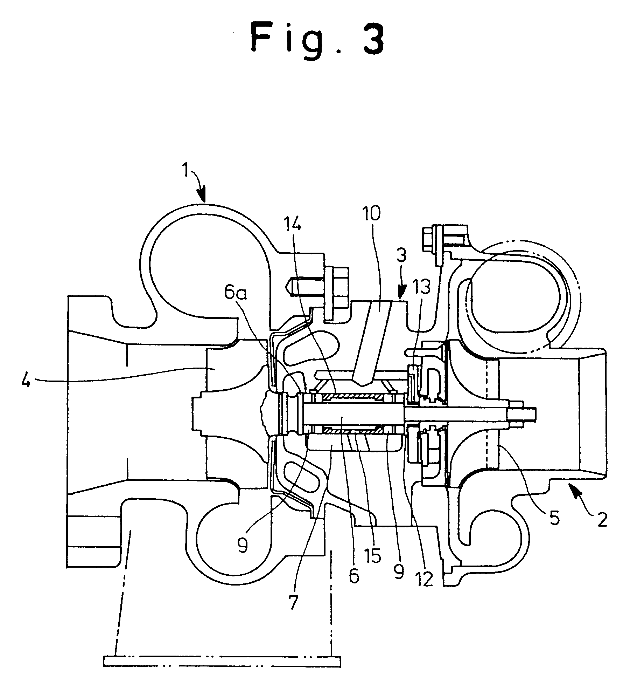

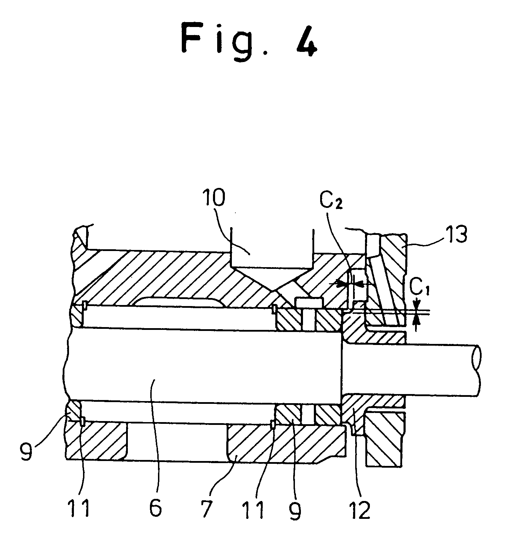

Further features and details of the invention will be apparent from the following description of two specific embodiments which is given with reference to the Figures 3 and 4 of the accompanying drawings, in which:-

Figure 3 is a sectional view similar to Figure 1 of a first embodiment of turbocharger in accordance with the present invention; and

Figure 4 is an enlarged scrap sectional view similar to Figure 2 showing the floating bush closest to the compressor impeller of a second embodiment of turbocharger in accordance with the invention.

The turbocharger shown in Figure 3 is generally similar to that shown in Figure 1 and the same reference numerals are used to designate similar components. A turbine housing 1 containing a turbine wheel 4 is connected to a compressor housing 2 containing a compressor impeller 5 by means of a bearing housing 3. The turbine wheel 4 and compressor impeller 5 are connected together by a turbine shaft 6 which extends through a journal support 7 within the bearing housing 3. The turbine shaft 6 is supported at its two ends by floating bushes 9 which are received in opposite ends of the journal support 7 and in which oil supply passages are formed. These passages communicate with respective further passages in the journal support 7 which in turn communicate with an oil supply passage 10 in the bearing housing 3.

The shaft bearing system further includes a cylindrical spacer 14 with an oil discharge hole 15 in its side wall between its ends which is force fitted into an intermediate portion of the journal support 7 between its two ends. The floating bush 9 adjacent to the turbine housing 1 is axially held in position between the spacer 14 and a shoulder 6a on the turbine shaft 6 while the floating bush 9 adjacent to the compressor housing 2 is axially immovably held between the spacer 14 and a thrust bush 12 arranged at the compressor housing 2.

The shaft bearing system is assembled as follows:

Firstly, the spacer 14 is force fitted into the intermediate portion of the cylindrical journal support 7. Then, a floating bush 9 is positioned in the journal support 7 adjacent to the turbine housing. Subsequently, the turbine shaft 6 is inserted into the bore of the journal support 7 so that its shoulder 6a abuts the outer end face of the floating bush 9 adjacent to the turbine housing 1. Thereafter, a floating bush 9 is positioned around the shaft 6 in the journal support 7 adjacent to the compressor housing 2 and the thrust bush 12 is installed to abut the outer end face of the floating bush 9 adjacent to the compressor housing 2. The spacer 14 may be made of resin or copper so as to prevent the journal faces on the journal support 7 for the floating bushes 9 from being damaged when fitting the spacer 14 into the housing 7. Alternatively, the intermediate portion of the housing 7 into which the spacer 14 is fitted may have an internal diameter slightly smaller than that of the end portions of the housing 7 into which the floating bushes 9 are fitted in order to prevent the housing end portions from being damaged when the spacer 14 is fitted.

In the bearing system described above, the floating bushes 9 are axially held in position by the spacer 14, the shoulder 6a and the thrust bush 12 so that the positioning of the bushes 9 is completed in a simple and stable manner without time-consuming assembly work unlike the case in which retaining rings 11 are used. The spacer 14 is installed under pressure and is prevented from rotating, thereby advantageously resulting in a reduction in frictional losses of the system and good rotational stability of the floating bushes 9.

In the embodiment shown in Figure 3, the floating bush 9 adjacent to the turbine housing 1 is held between the spacer 14 and the shoulder 6a on the turbine shaft 6. A retaining ring of the type which is force fitted may be used instead of the shoulder 6a.

The embodiment of Figure 4 is again generally similar to that shown in Figures 1 and 2. As before, the turbine shaft 6 which connects the turbine wheel 4 to the compressor impeller 5 is supported by floating bushes 9 rotatably fitted into opposite ends of the journal support 7. The outer end face of the bush 9 adjacent to the compressor impeller 5 abuts the thrust bush 12.

The floating bush 9 adjacent to the compressor impeller 5 is positioned with its outer end face slightly inwardly recessed so as not to extend axially outwardly beyond the outer end face of the journal support 7. The inner end of the thrust bush 12 is of stepped diameter so that its end portion fits into the bore of the journal support 7 with a radial clearance $C_1$ whilst a second portion spaced from the end portion is spaced from the outer end face of the journal support 7 by an axial clearance $C_2$.

The clearance $C_1$ is set to a value which is not less than the maximum possible radial movement of the turbine shaft 6 and which is required for maintaining a proper balance of the amount of oil between the opposed sides of the floating bush 9. The clearance $C_2$ is to be larger than the axial thrust clearance of the turbine shaft 6 and may be larger than the clearance $C_1$ and need be set only roughly.

In the second embodiment, the floating bush 9 adjacent to the compressor impeller 5 is held by a thrust bush 12 with a step such that its end may fit into the bore of the journal support 7 so that the radial clearance $C_1$ between the thrust bush 12 and the journal support 7 can be maintained even if the contact area of the floating bush 9 varies in relation to the inner wall of the journal support 7 or even if the axial clearance $C_2$ between the thrust bush 12 and journal support 7 fluctuates. As a result, stability in the supply and discharge of oil is attained and the turbine shaft 6 is supported with a high degree of stability.

It is to be understood that the present invention is not limited to the embodiments described above and that various modifications may be effected. In particular, the features of the first and second embodiments of the invention may be combined.

## Claims

1. A turbocharger including a turbine housing containing a turbine wheel, a compressor housing containing a compressor impeller and a turbine shaft interconnecting the turbine wheel and compressor impeller and rotatably supported by two floating bushes received in a journal support characterised by a cylindrical spacer (14) force fitted into the journal support between the two floating bushes (9).

2. A turbocharger as claimed in claim 1 characterised in that the outer end face of the floating bush (9) closest to the turbine housing (1) engages a shoulder (6a) formed on the turbine shaft (6).

3. A turbocharger as claimed in claim 1 or claim 2 in which the outer end face of the floating bush closest to the compressor housing is engaged by a thrust bush characterised in that the thrust bush (12) is of reduced diameter at its end which engages the floating bush (9) and that the said end is received in the journal support (7) and is spaced ($C_1$) from the surface of the bore in the journal support (7).

4. A turbocharger including a turbine housing containing a turbine wheel, a compressor housing containing a compressor impeller and a turbine shaft interconnecting the turbine wheel and compressor impeller and rotatably supported by two floating bushes received in a journal support, the outer end face of the floating bush closest to the compressor housing being engaged by a thrust bush, characterised in that the thrust bush (12) is of reduced diameter at its end which engages the floating bush (9) and that the said end is received in the journal support (7) and is spaced ($C_1$) from the surface of the bore in the journal support (7).

# Fig. 1

# Fig. 2

EP 0 494 798 A1

# Fig. 3

# Fig. 4

EP 0 494 798 A1

**European Patent Office**

## EUROPEAN SEARCH REPORT

Application Number

EP    92 30 0246

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 902 144 (THOREN)<br>* column 2, line 45 - line 66; claims 1,8; figures 1,2 *<br>--- | 1-4 | F01D25/16 |
| X | EP-A-0 185 515 (THE GARRET CORPORATION)<br>* page 10, line 11 - page 11, line 3; figure 2 *<br>--- | 1-4 | |
| X | US-A-4 358 253 (HIROSHI OKANO)<br>* column 4, line 3 - column 5, line 20; figures *<br>--- | 1,2 | |
| A | DE-A-2 061 393 (AKTIENGESELLSCHAFT KÜHNLE,KOPP & KAUSCH)<br>* the whole document *<br>--- | 1-4 | |
| A | DE-A-3 537 449 (MTU MOTOREN UND TURBINEN UNION GMBH)<br><br>----- | | |
| | | | **TECHNICAL FIELDS SEARCHED (Int. Cl.5)**<br><br>F01D |

The present search report has been drawn up for all claims

| Place of search | Date of completion of the search | Examiner |
|---|---|---|
| THE HAGUE | 08 APRIL 1992 | SERRANO GALARRAGA J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)